(19) Europäisches Patentamt
European Patent Office
Office européen des brevets

(11) **EP 4 235 148 A1**

(12) **EUROPEAN PATENT APPLICATION**

(43) Date of publication:
**30.08.2023 Bulletin 2023/35**

(51) International Patent Classification (IPC):
**G01N 19/04** (2006.01)

(21) Application number: **22460045.2**

(52) Cooperative Patent Classification (CPC):
**G01N 19/04**

(22) Date of filing: **22.09.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.12.2021 PL 43986621**

(71) Applicant: **Politechnika Slaska**
**44-100 Gliwice (PL)**

(72) Inventors:
• **Koziol, Mateusz**
**43-100 Tychy (PL)**
• **Berestecki, Lukasz**
**43-100 Tychy (PL)**
• **Malczewska, Magdalena**
**47-224 Kedzierzyn-Kozle (PL)**
• **Konik, Daria**
**41-303 Dabrowa Gornicza (PL)**
• **Jala, Jakub**
**44-240 Zory (PL)**
• **Olesik, Piotr**
**41-100 Siemanowice Slaskie (PL)**

(54) **METHOD OF ASSESSING LOAD-BEARING CAPACITY AND STRENGTH OF ANNULAR SOCKET JOINT BETWEEN A COMPOSITE AND ANOTHER MATERIAL**

(57) The method of assessing the bearing capacity and the strength of the annular socket connection between the composite and another material is characterized by preparing the material samples with a spacer made of a polymer resin composite with continuous or chopped fibers, which is achieved by pressing a smaller diameter pipe with a wound bundle of fibers saturated with mixed resin with a catalyst or hardener into a larger diameter pipe, the samples are then left until the resin has hardened and next, a load test via a shear loading of the joints between the composite insert and the pipe surfaces in both the tangential and axial directions is applied, and the maximum load is measured, while the samples are two pipes of the same or different materials, preferably composed of any material with a modulus of elasticity greater than 75 GPa, connected by a composite annular spacer to their walls, and for both pipes, the openings of any cross-section are made via holes at opposite points and the stress test via the shear loading of the joints between the composite insert and the pipe surfaces, acting in the tangential direction, consists of the sample fixed onto one side in the area of the pipe with a smaller or larger diameter, but outside the area that coincides with the composite spacer and this is achieved by means of a transferred rigid bar that is compressed with clamps rigidly connected to the external structure of the station, while the other side, supported on the support in a manner that allows for a rotational and torsional load to exert pressure onto the bar inserted through a pipe via which a bar that holds the sample has not been passed (it is also outside the area of the spacer), is subjected to a tangential load using known methods, however, it must be possible to measure, read and/or record at least the maximum load obtained during the test and via the load test, by a shearing of the joints between the composite insert and the pipe surfaces in the axial direction, the sample is supported at one end, i.e., on the side of the pipe with a smaller or larger diameter and there is also a rigid support adjacent to the wall at the end of the pipe along its entire circumference, or at least along half of it (otherwise, the pipe is caught by the clamping system) and the other end of the sample, i.e., a pipe with a smaller or larger diameter but forming the second part of the sample, is also supported by a rigid support adjacent to the wall at the end of the pipe along its entire circumference, or at least along half of it (or the pipe is caught by the clamping system) and the support, or clamping system at one or both ends of the sample, must be able to move and load the sample under compression and such a sample is subjected to axial loading by known methods and it must also be possible to measure and read and/or record at least the maximum load obtained during the test.

EP 4 235 148 A1

Fig. 1

**Description**

The subject of the presented invention is a method for assessing the load-bearing capacity and strength of an annular socket connection between a fiber that is a reinforced polymer (FRP) composite and another material.

So far, no method for assessing the strength of the ring socket connections has been developed. Bonds between polymer composites and other materials are assessed by standard methods for adhesive bonding that uses adhesives dedicated to wood or metal. Examples of standards that are used are PN-69/C-89300 (metal adhesives that determine the shear strength), PN-69/C-89302 (metal adhesives that determine the peel strength), or PN-69/C-89304 (metal adhesives that determine the flexural strength).

Loctite has developed a manual, and even a computer program, to calculate the strength of the cylindrical adhesive joints, which mainly evaluates the shaft-hub systems. Such connections are proposed as a temporary fixation of the shaft in the hub during the assembly of mechanical systems that contain the bearings. Mention of the creation of the cylindrical adhesive joints also appears in the advertising of 3M Company and instructional materials, but there is no more detailed information on how to evaluate their strength.

Several American standards describe the adhesive bonding of composite elements with concrete and other types of masonry. Examples are ASTM D7522/D7522M (tensile breakage between the laminate and the cement concrete or other masonry), ASTM D7616/D7616M (evaluation of various adhesive bonds of laminates with masonry, mainly in terms of shear), ASTM D7913/D7913M (pulling of composite bars from concrete - an assessment of the connection between the bars and the concrete matrix).

However, the examples described above are not related to composite technology and are not remotely close to the proposed concept. They do not account for the technological specificity of the polymer composites (lamination). There is also no method that considers the specific nature of an annular socket joint. The most important feature here is the appropriate selection of the thickness of the spacer during its molding, which guarantees the obtaining of the pressure necessary for the formation of the joint by pressing parts of the sample. It is an original approach that requires an appropriate dimensional regime and diligence. It has not yet been described in any standardization document or other commonly available publication.

The aim of the invention is to develop such a method for assessing the load-bearing capacity and the strength of the annular socket joint between the FRP composite and another material, which allows for the determination of both the purposefulness of the use of a, given *composite-other material-adhesive* combination and the surface area of the joint that guarantees the required load-bearing capacity.

The essence of the invention is a method of assessing the load-bearing capacity and the strength of the annular socket joint between the FRP composite and another material, characterized by the preparation of the material samples with a spacer composed of a polymer-resin-based FRP composite reinforced with continuous or chopped fibers. This is obtained by pressing a smaller diameter pipe, wound with a bundle of fibers impregnated with resin that is mixed with a catalyst or hardener, into a larger diameter pipe. The samples are then left until the resin cures, and then it is subjected to a mechanical test that consists of shearing the joint between the composite insert (that has arisen due to the curing of the resin) and the pipe surfaces in the tangential direction.

Moreover, the maximum load is measured by a mechanical test, which involves the shearing of the joints between the insert and the surface of the pipes in the axial direction. Here, the sample consists of two pipes of the same or different materials that are connected by an FRP composite ring spacer, in the walls of both pipes and at opposite points, which remains in any cross-sectional openings that are made. Preferably any material with a modulus of elasticity greater than 75 GPa is used. The mechanical test, involving the shear loading of the joints between the composite insert and the pipe surfaces in the tangential direction, consists of a sample fixed onto one side in the area of the pipe, with a smaller or larger diameter, but outside the area that coincides with the composite insert. This is achieved by means of a stiff rod that are compressed with clamps that are rigidly connected to the external structure of the stand and, on the other side, supported on the support in a manner that allows for a rotation and a torsion load by exerting pressure onto the rod that has been passed through the pipe. Through the latter, the rod securing the specimen was not passed; it is also outside the area of the spacer and the tangential directions by known methods.

It must also be possible to measure and read and/or record at least the maximum load obtained during the test. The load test by the shear loading of the joints between the composite insert and the pipe surfaces in the axial direction consists of the sample supported at one end. Namely, on the side of the pipe of the smaller or larger diameter, with a rigid support adjacent to the wall at the end of the pipe along its entire circumference, or at least along half of it (otherwise, the pipe is caught by the clamping system). The other end of the sample, i.e., a pipe with a smaller or a larger diameter that becomes the second part of the sample, is also supported by a rigid support adjacent to the wall at the end of the pipe along its entire circumference or, at least, along half its entire circumference (or the pipe is caught by the clamping system). The support or clamping system at one or both ends of the sample must be able to move and load the sample under compression, and such a sample is subjected to axial loading by known methods. It must be ensured that there is an ability to measure and read and/or record at least a maximum of the minimum load obtained during the test.

Preferentially, the composite spacer is formed by a manual or an automated method by impregnating a bundle of filaments or chopped fibers - in the form of a ribbon with a preferable width of 5 - 1500 mm, a length of 10 mm to 500 m, and a thickness of 1 mm to 100 mm - with a liquid epoxy, polyester resin, vinyl ester, acrylic, polyurethane, phenol-formaldehyde, urea-formaldehyde, melamine-formaldehyde, and polyimide that is mixed with a catalyst or a hardener. The saturated package is applied manually, or by a machine, to the pipe with a smaller diameter by winding one or more layers (preferably from 2 to 1000) and the tube with the wound bundle is pressed into the pipe with a larger diameter, if possible, with a force of 1 - 100 N. Next, the formed set is allowed to cure the resin. The glass, carbon, polyaramid, basalt, SiC, and $SiO_2$ fibers are preferentially used as filaments or cut fibers. Preference is given to the use of epoxy, polyester, vinyl ester, acrylic, polyurethane, phenol-formaldehyde, urea-formaldehyde, melamine-formaldehyde, and polyimide resins.

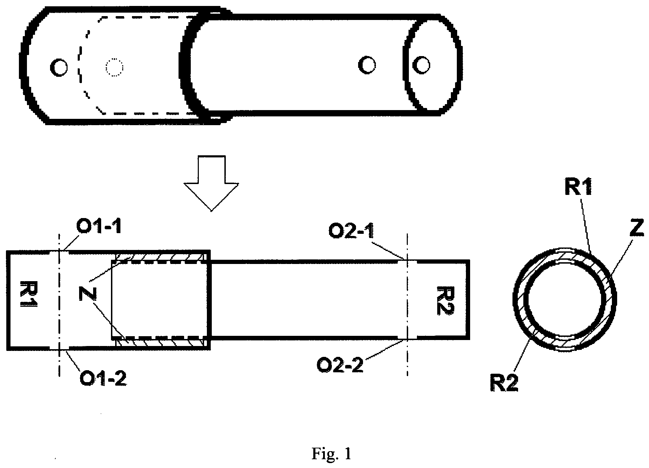

The annular socket connection consists of a pipe composed of a given material with a larger diameter, and a second pipe constructed of the same or a different material with a smaller diameter. An FRP composite ring spacer is positioned between the above-mentioned pipes and is permanently connected to both of them - outside of the smaller pipe but inside the larger pipe. This is shown in Fig. 1. The condition of the external and internal surfaces of the pipes should be comparable - any difference in the surface condition may affect the assessment results, which is unacceptable.

The joint is a model joint that acts between an FRP composite and another material. Such a connection can be used, for example, when a connection of the composite pipes or tanks with steel or ceramic elements is required - for instance, at the bottoms or the threaded ends. A composite is a material that is composed of two main components: the matrix and the reinforcement. The matrix of the composite can be epoxy, polyester, vinylester, acrylic, polyurethane, phenol-formaldehyde, urea, melamine, or polyimide resin. The reinforcement of the composite may be woven, knitted, braided, or non-woven. Each of these structures can be made of glass, carbon, polyaramid, basalt fiber-based, or a hybrid fibers system that contains any of the above. The arrangement of the fibers in the individual layers can be chaotic (i.e., in a mat-like structure) or oriented in any configuration, either in one or more directions.

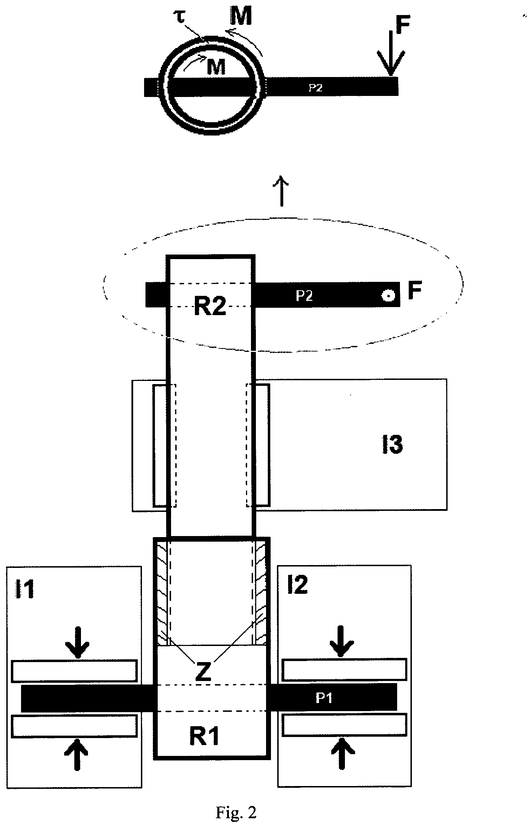

This invention can be depicted diagrammatically. Fig. 1 shows a socket connection between the two pipes via the composite spacer, where R1 represents the larger diameter pipe, R2 denotes the smaller diameter pipe, and Z is the ring-shaped composite spacer, which is connected to pipes R1 and R2. Moreover, O1-1 and O1-2 signify the holes in the walls of pipe R1, O2-1 and O2-2 are the holes in the walls of pipe R2. Fig. 2 represents the shear test of the pipe connection between the composite and the other material in the tangential direction, which involves bolting the connected pipes. Here, R1 depicts the pipe of larger diameter, R2 denotes the pipe of smaller diameter, Z signifies the composite ring connected to both pipes, I1 and I2 are the restraints with clamping vices, I3 is the restraint with the guide, P1 and P2 are the rigid bars, F is the applied force, M is the torsional moment, and $\tau$ is the tangential stress.

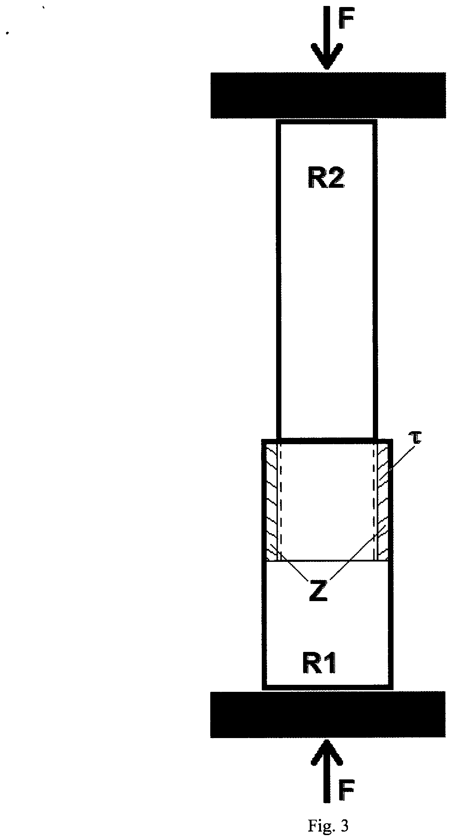

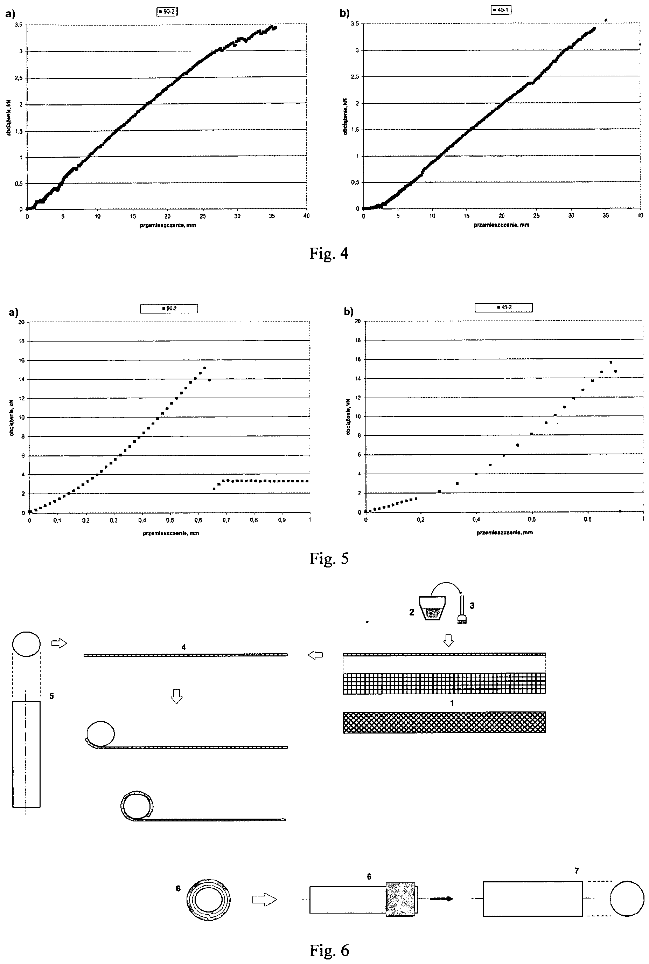

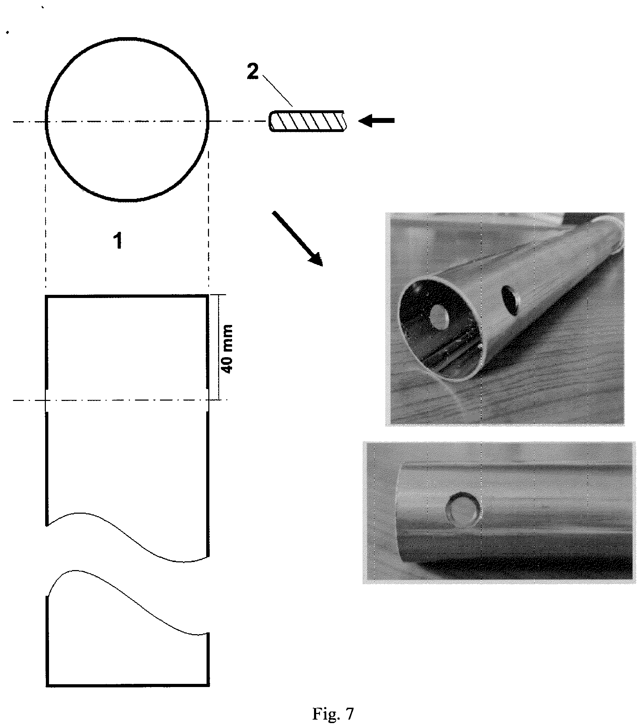

Fig. 3 displays the method for performing the shear test of the pipe connection between the composite and the other material in the axial direction, which is achieved by compressing (pressing) the connected pipes. Here, R1 represents a pipe with a larger diameter, R2 denotes a pipe with a smaller diameter, Z is a composite ring connected to both pipes, F is the applied force, $\tau$ is the shear stress at the joint, with an arrangement of the fibers in the fabric strips in the 0/90 direction, a) for the arrangement of the fibers in the fabric strips in the 45/45 direction and the 0/90 direction, b) for the arrangement of fibers in the fabric strips in the 45/45 direction. Fig. 6 is a diagram of the winding of the fabric web saturated with resin on the pipe. Here, 1 is the glass fabric webs (top - option 0/90, bottom - option 45/45; see description in example III), 2 is the container with a mixture of resin and catalyst, 3 is the brush, 4 is the ribbon saturated with resin with catalyst, 5 is the tube R2, 6 is the tube R2 with wound ribbon, and 7 is the tube R1. Fig. 7 shows how to drill the holes in pipes: 1 is the pipe and 2 is the drill.

A description and analysis of the outcomes are given in the following text. The method, according to this invention, consists of comparing and evaluating the results of two types of measurements: the connection shear in the tangential and axial directions. The first type of measurement, the shearing of the joint in the tangential direction, consists of a twisting load on the pipes connected by the joint according to the concept shown in Fig. 2.

The measurements, according to this invention, consist of fixing one of the two pipes connected coaxially with the use of a composite ring-shaped insert, and then forcing the other pipe to twist. Both the restraint and the twist constraint are accomplished by means of rigid bars that pass through both pipes, via holes bored in the walls of the pipes that have a diameter allowing for the bars to move freely. The exerted force must be such that the value of the applied force can be measured, and at least the maximum value obtained can be recorded. Loading with the use of a testing machine, or an actuator equipped with a strain gauge system for measuring the force, is preferred.

The second type of measurement, the axial shear of the joint, consists of loading the pipes connected by the joint by compression, according to the concept shown in Fig. 3. The measurement, according to this invention, consists of vertically positioning a set of pipes that are connected to each other coaxially via a composite ring-shaped insert on a rigid plate support and then applying pressure from the opposite side through a second plate support. The exerted force must be such that the value of the force applied can be measured, and at least the maximum value obtained can be recorded. Applying a force with the use of a testing machine, or an actuator equipped with a strain gauge system for measuring the force, is preferred.

The maximum values of the recorded force obtained in both of the above-mentioned types of tests are equivalent to the maximum load capacity of a given connection in either the tangential or axial direction. Considering the theoretical indications that concern the elasticity limit of the materials, it can be assumed that during the operation it is advantageous to load a given connection with a force not greater than 0.6 of the force that corresponds to the load capacity. This guarantees that the connection will not be permanently damaged when loaded.

The method assumes that the maximum recorded force during the measurement of the shear of the joint in both the tangential and axial direction, when it is related to the appropriate dimensions of the tested samples, corresponds to the strength of the joint, i.e., the highest stress that is obtained. To calculate the stress in the joint between the smaller pipe and the composite connecting spacer, when measuring in the tangential direction, we begin with the induced torsional moment determined from:

$$M_1 = F_1 \cdot L_1, \qquad\qquad (1)$$

where $M_1$ denotes the torsional moment caused by the pressure of the testing machine on the bar (transferred through the pipe) in units of $N \cdot mm$, $F_1$ represents the force applied by the testing machine to the loading bar with units N, and $L_1$ is the distance from the point where the force is applied by the machine to the pipe axis in mm. The restrained pipe is connected by a joint to the twisted pipe, which creates a counter-torque for the exerted moment that results from the resistance of the material and the joint. On the radius corresponding to the joint position, the following expression applies:

$$M_2 = F_2 \cdot L_2 \rightarrow F_2 = \frac{M_1}{L_2}, \qquad\qquad (2)$$

where $M_2$ is the counter torque caused by the material and the joint resistance ($M_2 = M_1$) in units of N . mm, $F_2$ is the joint resistance force in units N, and $L_2$ is the outer radius of the smaller pipe in mm. In turn, the material resistance is caused by the tangential stress, which on the radius corresponding to the joint can be expressed as follows:

$$\sigma = \frac{F_2}{S}, \qquad\qquad (3)$$

where $\sigma$ represents the shear stress at the joint in MPa and S is the joint surface area in mm$^2$.

Moreover:

$$S = 2 \cdot \pi \cdot L_2 \cdot b, \qquad\qquad (4)$$

where b is the joint width with units mm. That is:

$$\sigma_{skr} = \frac{F_1 \cdot L_1}{2 \cdot \pi \cdot L_2^2 \cdot b}. \qquad\qquad (5)$$

Moreover, the tangential stress at the joint during the shear tests, when measured in the axial direction, can be calculated from this formula:

$$\sigma_c = \frac{F_c}{2 \cdot \pi \cdot L_2 \cdot b}, \qquad\qquad (6)$$

where $\sigma_c$ denotes the shear stress at the joint during the shear tests under axial compression in MPa and $F_c$ is the pressure force of the testing machine, shearing the joint during the axial compression of the pipes that connect with it.

A total of 12 samples were prepared, each of which involved a set of two H18N9 stainless steel pipes (according to the pattern shown in Fig. 1). In all cases, one of the pipes had an inner diameter of 60 mm and a length of 300 mm, and the other had an inner diameter of 54 mm and a length of 400 mm. Both types of pipes had a wall thickness of 1.5 mm. The outer and inner surfaces of all pipes were ground to the same surface condition. For each sample, the pipes were connected via a composite spacer such that the spacer joined a portion of the outer surface of the smaller diameter tube to a portion of the inner surface of the larger diameter tube, which is analogous to Fig. 1. The joint was obtained by a two-step operation. In the first stage, strands (ribbons) of the linen glass fabric with a weight of 320 g / $m^2$, width of 40 mm, and length of 720 mm were prepared. The strands were cut in two alternative directions of the fiber arrangement: 0/90 and 45/45 degrees. This was to determine and evaluate the effect of the arrangement of the fibers in the laminate that form the spacer on the strength of the connection.

The cut strands were contact impregnated with a curing-catalyzed polyester resin (lifetime at room temperature approximately 35 minutes). The resin-saturated strands were wound onto the smaller diameter pipe, selecting a surface area not far from the end of the pipe. The pipe with the wound-up strand was inserted into the inside of the pipe with a larger diameter by pressing with a force of 10 $\pm$ 2 N. The length of the prepared strand in each case, corresponding to four windings per pipe with the smaller diameter, which achieved a thickness of the spacer that is suitable for the operation of pressing and creating a joint, was small enough to be pressed and, simultaneously, was large enough to press the spacer against the surface of the pipes. This force is likely to be similar to that planned for the creation of the intended industrial connections. According to the design guidelines, the interference force should be selected and the thickness of the composite spacer should be determined. The creation of the joints by pressing requires a particular accuracy from the workers.

Half of the prepared samples were sequentially mounted onto the stand according to the pattern shown in Fig. 2. The other half of the samples were measured according to the formula shown in Fig. 3. The loading and the simultaneous measurement of the acting force were performed in all the tests using the INSTRON 4469 testing machine. In both loading models (i.e., tangential and axial), an increasing shear load of the two surfaces of the joint - between the composite ring and both the pipe and the surface connecting the spacer with the larger pipe - is applied.

The results of the tests provide the force-displacement characteristics, which were used to analyze the course of the joint damage and to determine its load capacity and strength. Exemplary characteristics, found by measuring the shear in the tangential direction, are shown in Fig. 4; those determined by measuring the shear in the axial direction are displayed in Fig. 5. The obtained results of the determined maximum stresses obtained at the joints are summarized in Tables 1 and 2.

Table 1. Results obtained in the tangential shear tests (according to the model shown in Fig. 2). In both cases of the fiber arrangement, the results of only one of the three measurements were considered, as the other two were not qualified as correct.

| Characteristic, dimension | Sample 90 st. | Sample 45 st. |
|---|---|---|
| $F_{maks}$ (des. $F_1$), N | 3447 | 3394 |
| Displacement at $F_{maks}$, mm | 35.1 | 33.38 |
| Arm $L_1$, mm | 93 | 93 |
| Radius $L_2$, mm | 28.5 | 28.5 |
| Joint width b, mm | 40 | 40 |
| Maximum stress $\sigma_{skr\,max}$, MPa | 1.57 | 1.55 |

Table 2. Results obtained in the axial shear tests of the samples (according to the formula shown in Fig. 3).

| Characteristic, dimension | Sample | | | | | |
|---|---|---|---|---|---|---|
| | 90-1 | 90-2 | 90-3 | 45-1 | 45-2 | 45-3 |
| $F_{maks}$ (des. $F_c$), N | 9237 | 15107 | 8086 | 19107 | 15577 | 9600 |
| Radius $L_2$, mm | 28.5 | 28.5 | 28.5 | 28.5 | 28.5 | 28.5 |
| Joint width b, mm | 40 | 40 | 40 | 40 | 40 | 40 |
| Maximum stress $\sigma_{c\,max}$, MPa | 1.29 | 2.11 | 1.13 | 2.67 | 2.18 | 1.34 |
| Average maximum stress, MPa | | | 1.51 | | | 2.06 |
| Mean deviation, MPa | | | 0.40 | | | 0.48 |

Due to the specificity of the preparation of joints, mainly there are: unfavorable ways of inserting the joint into the pipe by a wet insertion method, no possibility of obtaining strong and even pressure, high influence of the "human factor", and not all the samples are destroyed in the tests in accordance with the assumptions. For example, evidently, non-axial torsion of the sample during the tangential loading tests (according to the diagram in Fig. 2) is an indication to eliminate the sample from the measurement series and not to account for it in the obtained results since they would become distorted. Due to incorrect measurement behavior, two of the three samples subjected to the tangential loading tests in this example were eliminated.

Based on the previously acquired knowledge and the theoretical premise, it was initially expected to obtain the connection strength at the level of 0.8 - 1.0 MPa, which is a satisfactory level. In relation to the above assumptions, it was found that the strength of the connection at the joint is very good because, in both cases, the samples tested in the tangential direction exceed 1.5 MPa and, in all the samples tested in the axial direction, it exceeds 1.1 MPa.

The observed mechanism of the sample destruction consisted, in all cases, of the abrupt breaking of the connection after reaching the maximum load, which results from the relatively brittle mechanical characteristics of the cured resin. It should also be noted that the arrangement of the fibers in the composite insert, at an angle of 45/45 degrees to the direction of loading, has a positive effect on the load-bearing capacity and the strength of the joint, with respect to the option of laying the fibers at an angle of 0/90 degrees.

A sample for the axial shear tests (along the length of the pipes) was prepared using two types of 316 austenitic steel pipes. The first pipe (contract name R1) had an outer diameter of 63 mm and a wall thickness of 1.5 mm. The length of tube R1 was 300 mm. The second pipe (contract name R2) had an inside diameter of 54 mm and a wall thickness of 1.5 mm. The length of tube R2 was 400 mm. A suitable glass roving web was also prepared (see Example III). The web was impregnated with polymeric curable resin (see Example III). Then, the resin-impregnated web was wound onto a tube R2 (Fig. 6). The next step was to insert the R2 tube with the wound ribbon into the R1 tube at a depth of 45 $\pm$ 2 mm. A web length of 220 mm ensured that, after being wound on the R2 pipe, the thickness of the resulting ring allowed for it to be inserted into the R1 pipe with a slight resistance - the force was measured as 10 $\pm$ 2 N. This resulted in the winding layers remaining intact and creating the pressure necessary for the effective connection of the ring and both pipes. The pipes, connected with a resin-fabric ring spacer, were left for 72 hours to enable the hardening and post-hardening of the resin.

The sample for the tangential shear tests (along the circumference of the pipes) was prepared by the same method as the sample for the axial shear tests. Except that, in the walls of pipes R1 and R2, two holes with a diameter of 16 mm were drilled in such a way that enabled them to be exactly opposite to each other; their common axis is 40 mm from the end of the tube - see Figs 1, 2, and 7. The remaining steps of the sample preparation procedure (i.e., preparation of the resin-fabric web, applying the web, pressing the R1 pipe into the R2 pipe, and allowing the sample to cure the resin) were analogous to the sample for the axial shear tests.

The preparation of the samples for the shear tests involved the preparation of an annular composite spacer. The first step was to cut an appropriate roving glass cloth with a plain weave and a weight of 320 g/m$^2$ (manufacturer KROSGLASS, Krosno), with dimensions 40 $\times$ 220 mm. The web was cut from a fabric roll in two alternative directions - along the fiber strands (0/90 direction) or at an angle of 45° to the fiber strands (45/45 direction). The length of the web was four times the circumference of the tube R2, which resulted in an approximately equal surface area of the outer layer when wound on the tube R2 (Fig. 6). After cutting, the web was impregnated with ESTROMAL 14 LM polyester resin (manufacturer LERG, Pustków) mixed with a 1.5 wt. METOX 50 catalyst (manufacturer OXYTOP, Stęszew). The impregnation was performed by the contact method (manually, with a brush). Around 3 g of resin mixed with the catalyst was used to saturate the web. After the saturation, the procedure of applying the web to the tube R2 was carried out by winding (Fig. 6). After 35 minutes elapsed at 200 °C, from the moment of mixing the resin with the catalyst to the time of the gelation (the initial phase of the hardening process) - which is the so-called resin lifetime - the procedures for applying the web and for pressing the R1 tube into the R2 tube must be completed.

The method for assessing the bearing capacity, and the strength of the ring socket connection between the composite and another material, consists in performing two independent loading tests. Here, the connection is loaded under a shearing force, in the first type of tests - in the tangential direction - and, in the second type of tests, in the axial direction. In the case of the tangential test, a sample with a composite spacer and drilled holes (Fig. 7) with inserted bars (Fig. 2) positioned on three vices - i.e., two clamping rod P1 (l1 and l2 in Fig. 2) and one supporting the sample (l3 in Fig. 2) - is subjected to loading by pressure on the bar P2 with a force F (see Fig. 2) using the testing machine. The pressure on the rod creates a torque in tube R2 (see Fig. 2) and the resistance from the restrained tube R1 (see Fig. 2) causes a shearing load on the composite Zjoint joining tubes R1 and R2.

The maximum value of the force recorded by the testing machine during the test is the maximum load capacity of the connection in the tangential direction. The maximum stress transmitted by the joint during the test (i.e., the joint shear strength in the tangential direction) is determined according to formula (5). For the axial test, a specimen with a composite spacer without drilled holes is positioned vertically between two rigid plates and subjected to a pressure load using the testing machine (Fig. 3). The axial pressure on the pipes R1 and R2 in the opposite directions create a shearing load in the composite Z-joint that joins the pipes R1 and R2 (see Fig. 3). The maximum value of the force recorded by the testing machine during the test is the maximum load capacity of the connection in the axial direction. The maximum stress transmitted by the joint during the test (i.e., the joint's axial shear strength) is determined according to formula (6). To assess the bearing capacity and/or the strength of the annular socket connection between the composite and another material, the results of both performed tests - for the tangential and axial directions - should be considered.

**Claims**

1. The method of assessing the bearing capacity and the strength of the annular socket connection between the composite and another material is **characterized by** preparing the material samples with a spacer made of a polymer resin composite with continuous or chopped fibers. This is achieved by pressing a smaller diameter pipe with a wound bundle of fibers saturated with mixed resin with a catalyst or hardener into a larger diameter pipe; the samples are then left until the resin has hardened. Next, a load test via a shear loading of the joints between the composite insert and the pipe surfaces in both the tangential and axial directions is applied, and the maximum load is measured. The samples are two pipes of the same or different materials, preferably composed of any material with a modulus of elasticity greater than 75 GPa, connected by a composite annular spacer to their walls. For both pipes, the openings of any cross-section are made via holes at opposite points. The stress test via the shear loading of the joints between the composite insert and the pipe surfaces, acting in the tangential direction, consists of the sample fixed onto one side in the area of the pipe with a smaller or larger diameter, but outside the area that coincides with the composite spacer. This is achieved by means of a transferred rigid bar that is compressed with clamps rigidly connected to the external structure of the station. The other side, supported on the support in a manner that allows for a rotational and torsional load to exert pressure onto the bar inserted through a pipe via which a bar that holds the sample has not been passed (it is also outside the area of the spacer), is subjected to a tangential load using known methods. It must be possible to measure, read and/or record at least the maximum load obtained during the test. Via the load test, by a shearing of the joints between the composite insert and the pipe surfaces in the axial direction, the sample is supported at one end, i.e., on the side of the pipe with a smaller or larger diameter. There is also a rigid support adjacent to the wall at the end of the pipe along its entire circumference, or at least along half of it (otherwise, the pipe is caught by the clamping system). The other end of the sample, i.e., a pipe with a smaller or larger diameter but forming the second part of the sample, is also supported by a rigid support adjacent to the wall at the end of the pipe along its entire circumference, or at least along half of it (or the pipe is caught by the clamping system). The support, or clamping system at one or both ends of the sample, must be able to move and load the sample under compression. Such a sample is subjected to axial loading by known methods. It must also be possible to measure and read and/or record at least the maximum load obtained during the test.

2. The method, according to claim 1, is **characterized by** the fact that the spacer is formed by a manual or an automated method by impregnating a bundle of continuous or staple fibers. This is achieved in the form of a web, preferably 5 - 1500 mm wide, 10 mm to 500 m long, and 1 mm up to 100 mm thick. Liquid epoxy, polyester, vinyl ester, acrylic, polyurethane, phenol-formaldehyde, urea-formaldehyde, melamine-formaldehyde, or polyimide resins mixed with a catalyst or hardener is used. The saturated package is applied manually or by machine to a pipe with the smaller diameter, through a winding of one or more layers (preferably from 2 to 1000). The tube with the wound bundle is then pressed into the tube with the larger diameter, preferably with a force of 1 - 100 N. Next, the set is left to cure the resin.

3. The method, according to claims 1 or 2, is **characterized by** glass, carbon, polyaramid, basalt, SiC, or $SiO_2$ fibers used as filaments or staple fibers.

4. For the method relating to p. According to any preceding claims, the resin is **characterized by** the epoxy, polyester, vinyl ester, acrylic, polyurethane, phenol-formaldehyde, urea-formaldehyde, melamine-formaldehyde, or polyimide resins used.

Fig. 1

Fig. 2

Fig. 3

Fig. 4

Fig. 5

Fig. 6

Fig. 7

| | Europäisches Patentamt European Patent Office Office européen des brevets | **EUROPEAN SEARCH REPORT** | **Application Number** EP 22 46 0045 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Barbosa Dr ET AL: "Experimental and numerical assessment of tensile loaded tubular adhesive joints", Proceedings of the Institution of Mechanical Engineers. Part L, Journal of materials, design and applications, 1 March 2019 (2019-03-01), pages 452-464, XP093066393, London, England DOI: 10.1177/1464420718808543 Retrieved from the Internet: URL:https://journals.sagepub.com/doi/abs/10.1177/1464420718808543?journalCode=pila * Section "Experimental details" * ----- | 1-4 | INV. G01N19/04 |
| A | US 5 691 482 A (NICKERSON JR EARL S [US] ET AL) 25 November 1997 (1997-11-25) * column 2, line 36 - line 65 * * figure 3 * ----- | 1-4 | |
| A | NAKANO Y: "STRESS ANALYSIS AND STRENGTH OF ADHESIVE LAP JOINTS BY ALUMINIUM ALLOY HOLLOW SHAFTS SUBJECTED TO TORSIONAL MOMENTUM", WELDING INTERNATIONAL, TAYLOR & FRANCIS, ABINGDON, GB, vol. 17, no. 2, 1 January 2003 (2003-01-01), pages 116-120, XP001160376, ISSN: 0950-7116, DOI: 10.1533/WINT.2003.3063 * Section "Experimental method" * ----- | 1-4 | TECHNICAL FIELDS SEARCHED (IPC) G01N |
| A | CN 203 275 273 U (UNIV GUANGDONG TECHNOLOGY) 6 November 2013 (2013-11-06) * the whole document * ----- | 1-4 | |

The present search report has been drawn up for all claims

| Place of search | Date of completion of the search | Examiner |
|---|---|---|
| The Hague | 22 July 2023 | Liefrink, Feike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 46 0045

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2023

| Patent document cited in search report | | Publication date | Patent family member(s) | Publication date |
|---|---|---|---|---|
| US 5691482 | A | 25-11-1997 | NONE | |
| CN 203275273 | U | 06-11-2013 | NONE | |

EPO FORM P0459

For more details about this annex : see Official Journal of the European Patent Office, No. 12/82